(19) **Europäisches Patentamt**
European Patent Office
Office européen des brevets

(11) **EP 2 487 678 A1**

(12) **EUROPÄISCHE PATENTANMELDUNG**

(43) Veröffentlichungstag:
**15.08.2012 Patentblatt 2012/33**

(21) Anmeldenummer: **12000818.0**

(22) Anmeldetag: **08.02.2012**

(51) Int Cl.:
***G10K 15/04*** *(2006.01)*     ***G01N 29/34*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.02.2011 DE 102011010678**

(71) Anmelder: **Gehrlein, Jan**
**76756 Bellheim (DE)**

(72) Erfinder: **Schröder, Hehrwart**
**88662 Überlingen-Hödingen (DE)**

(74) Vertreter: **Otten, Herbert**
**Otten, Roth, Dobler & Partner Patentanwälte**
**Grosstobeler Strasse 39**
**88276 Ravensburg/Berg (DE)**

(54) **Verfahren und Vorrichtung zur Anregung mechanischer Schwingungspulse für Longitudinalwellen und für Transversalwellen**

(57)    Die Erfindung betrifft ein Verfahren zur Anregung mechanischer Schwingungen, wobei die Erzeugung des Schallimpulses thermisch, vorzugsweise durch elektromagnetische Induktion und/oder durch Ausrichtung magnetischer Momente, vorzugsweise durch supraleitungstechnisch erzeugte Magnetfelder erfolgt.

Fig.1

EP 2 487 678 A1

Printed by Jouve, 75001 PARIS (FR)

**Beschreibung**

Die Erfindung betrifft ein Verfahren zur Anregung mechanischer Schwingungspulse für Longitudinalwellen und für Transversalwellen mittels akustischer Methoden.

Konventionelle bekannte Schallgeber erfordern im Ultraschallbereich stets einen Flüssigkeitsfilm oder ein Gel, um Ultraschall in einen Festkörper effektiv einzukoppeln. Der Grund sind die frequenzabhängigen Reflexionen an den Grenzflächen, die eine Einkoppelung hoher Frequenzen im MHz-Bereich erschweren und schließlich verhindern.

Technologischer Hintergrund

Erzeugung von Longitudinalwellen: Die Oberfläche eines Prüfkörpers wird von einem Impulsgenerator im Winkel von 90 Grad zur Oberfläche elektromagnetisch in Schwingungen versetzt. Die Schallwellen breiten sich als Druckschwankungen in einer in den Körper im Wesentlichen der Anregungsrichtung entsprechenden Ausbreitungsrichtung aus.

Erzeugung von Transversalwellen: Die Oberfläche eines Prüfkörpers wird parallel zur Oberfläche in Schwingungen versetzt. Die Schwingungen pflanzen sich ebenfalls ins Innere des Körpers fort.

Grundsätzlich besteht die Möglichkeit, beide Wellenarten zu kombinieren und Wellenpakete mit longitudinalem und transversalem Anteil in einen Körper einzukoppeln. Hierbei muss eine Schrägstellung der Anregeimpulses zwischen den Winkelbereichen der senkrechten Anregung zur Oberfläche und der parallelen Anregung zur Oberfläche erfolgen. Bei der Schrägeinstellungen können besondere Winkel für besondere Materialien bevorzugt effektiv einkoppeln. Es sollte beispielsweise bei Eisen der Einschallwinkel kleiner als 34 Grad zur Oberfläche gewählt sein. Die Schallgeschwindigkeiten für Longitudinalwellen und Transversalwellen sind im Material meist verschieden. Die Schallgeschwindigkeit von Transversalwellen ist in der Regel kleiner als die Schallgeschwindigkeit von Longitudinalwellen.

Ab einem bestimmten Winkel zwischen Impulsgenerator und Materialoberfläche breiten sich im Prinzip nur noch Longitudinalwellen aus.

Es gilt die Beziehung:

$$\frac{\text{Schallgeschwindigkeit longitudinal}}{\text{Schallgeschwindigkeit transversal}} = \frac{\sin(\text{Einfallswinkel Longitudinalwelle})}{\sin(\text{Einfallswinkel Transversalwelle})}$$

Ein Interessanter Effekt ist die Bestimmung wesentlicher Materialkonstanten aus den Schallgeschwindigkeiten für Longitudinalwellen (cL) und Transversalwellen (cT).

Es gelten folgende Beziehungen des Elastizitätsmoduls E, des Schermuduls G und der Poisson-Zahl $\mu$ des Materials aus den beiden Schallgeschwindigkeiten:

Schallgeschwindigkeit der Longitudinalwelle:

$$cL = (\quad(E / \rho \ * \ (1 - \mu) / \quad(1 + \mu) \ * \ (1 - 2\mu)\quad)^{1/2}$$

Dabei sind E = Elastizitätsmodul und $\mu$ = Poisson-Zahl und $\rho$ = Dichte des Materials

Schallgeschwindigkeit der Transversalwelle:

$$cT = (\ G / \ \rho\ )^{1/2}$$

Dabei sind G = Schermudul und $\rho$ = Dichte des Materials

Das Elastizitätsmodul E und das Schermudul G eines Festkörpers sind über die Poissonzahl $\mu$ miteinander

verknüpft:

$$E / G = 2 * (1 + \mu)$$

Damit können alle drei elastischen Größen aus den beiden Schallgeschwindigkeiten cL und cT berechnet werden.

Aus dem Stand der Technik sind Erzeugungen von Schallimpulsen mittels eines Impulshammers bekannt.

Die Anregung mechanischer Schwingungen in einem Festkörper bietet eine Vielzahl von technologischen Einsatzmöglichkeiten. So können einerseits Schwingungsspektren zur Analyse von Festkörperbeschaffenheiten zum Einsatz kommen, andererseits können Informationen durch Schwingungen übertragen werden oder Schwingungspakete Informationen über bestehende Körper enthalten.

Zur Durchführung des erfindungsgemäßen Verfahrens ist es notwendig, die Ausbreitungsgeschwindigkeit für akustische Wellen bzw. Schall im Material des jeweiligen Körpers zu kennen. Diese kann entweder Tabellenwerken entnommen werden, oder, ebenfalls im Zuge der Ausführung des erfindungsgemäßen Verfahrens, ermittelt werden.

Zur Durchführung des erfindungsgemäßen Verfahrens ist es notwendig, einen Schallerzeuger an einer ersten definierten Position P1 an dem Körper anzuordnen.

An der ersten definierten Position P1 wird sodann ein Schallimpuls S1 erzeugt, welcher mit der mittleren Ausbreitungsgeschwindigkeit v durch das Material des Festkörpers voranschreitet. Um später ein als Schallsignal detektierbares Signal vorzufinden, ist es notwendig, dass die Anregungsdauer des erzeugten Schallimpulses kleiner ist als die kürzeste Translationsdauer des Schallimpulses im Körper von der Anregung bis zu einem Reflexionsort und zurück zum nächstliegenden Empfänger. Ein Reflexionsort kann beispielsweise eine Grenzfläche des Körpers, aber auch ein Defekt oder eine sonstige Veränderung des Materialgefüges sein.

Vorzugsweise ist es erforderlich, dass der Schallimpuls bei seiner Anregung in spektraler Zerlegung Schwingungen mit Frequenzen bzw. Wellenlängen enthält, welche in der Größenordnung des zu detektierenden Reflexionsortes anzusiedeln sind. Müssen beispielsweise Defekte in der Größenordnung von 1 mm detektiert werden, so ist es notwendig, dass der Schallimpuls Schwingungen enthält, deren Wellenlänge in der Größenordnung eines Millimeters oder darunter ausgebildet sind, da ansonsten das physikalische Auflösungsvermögen zur Detektion dieses Defektes nicht ausreichend ist.

Messung der Schallsignale:

Die supraleitungselektronische Ausführung kann mit Hilfe der bekannten Josephson-Logik und mit der SQUID-Technik die Oberflächenschwingungen bei metallischen Oberflächen mit Hilfe der Magnetfeld-Änderungen in der supraleitenden Spule detektieren. Eine entsprechende Analysemethode ist aus dem Stand der Technik, beispielsweise aus der EP 0 812 479 B1 bekannt.

Die konventionelle Erfassung der Schallsignale erfolgt so, dass Oberflächenschwingungen am Körper durch entsprechend empfindliche Mikrofone, Laserinterferometer oder vergleichbare Anordnungen aufgenommen werden. In einem weiteren Verfahrensschritt werden die Schallsignale analysiert und über mathematische Methoden dahingehend überprüft, ob sie von einem Defekt in Form einer Reflexion oder Transmission abstammen, oder ob sie eventuell als direkt von dem Signalgeber ausgesendeten Schallimpuls zum Erfassungspunkt gelangt sind. Als Analysemethode bieten sich hierbei spektrale Analysen, Phasenanalysen sowie diverse Transformationen, insbesondere eine Wavelet-Transformation, an.

Es ist vorgesehen, dass die Erzeugung des Schallimpulses thermisch, vorzugsweise durch elektromagnetische Induktion und/oder durch Ausrichtung magnetischer Momente, vorzugsweise durch supraleitungstechnisch erzeugte Magnetfelder erfolgt.

wie eingangs beschrieben ist es wichtig, den später zur Analyse herangezogenen Schallimpuls mit definierten Eigenschaften an einer ersten Position P1 am Körper zu erzeugen.

Eigenschaften des nach dem Stand der Technik vom Impulshammer erzeugten Schallsignals:

Der Impulshammer erzeugt ein Schallsignal mit breitem Spektrum. Dabei hängt die maximal erreichbare Frequenz innerhalb dieses Spektrums von der Hammermasse, seiner Beschleunigung und von der Verweilzeit der Masse an der Oberfläche des Prüfkörpers ab.

Je größer die Masse des Impulshammers ist, um so niedriger wird die Frequenz. Je länger die Berührungszeit ist, um so niedriger wird die Frequenz.

Um hohe Frequenzen zu erreichen, muß die Hammermasse minimal und die Berührungszeit minimal werden.

Trotzdem erzeugt man mit der Impulshammer-Methode stets ein sehr breites Schall-Spektrum, das vom hörbaren Bereich bis in den MHz-Bereich reicht.

Für bildgebende Aufgaben sind aber sehr schmale Schallspektralbänder vorteilhaft. Für bildgebende Verfahren ist es somit vorteilhaft, wenn ein Schallgeber in der Lage ist, jede gewünschte Frequenz, beispielsweise vom hörbaren Schall bis in den GigaHz-Bereich hinein auswählen und im Prüfkörper erzeugen zu können.

Zusätzlich können nur mit der vorgeschlagenen Methode sehr kurze Wellenzüge mit wenigen Schwingungen erzeugt werden. Diese Schwingungen können zudem durch Veränderungen des Spektrums der wenigen ausgewählten Schwingungen, binär codiert werden, um nach dem Empfang der Schallwellen die Signale vom Rauschen trennen zu können.

Diese Aufgaben werden mit der vorgeschlagenen Technik erfüllt.

Aufeinanderfolgende Impulse sind mit dem neuen Verfahren streng reproduzierbar.

Problematisch bei der Anregung mittels eines Impulshammers ist, dass die entstehenden Schallwellen sehr lange nachklingen. Damit vermischen sich die nachklingenden Wellen mit den Echos und erschweren beispielsweise eine Echo-Identifizierung. Nachdem der Schall die Abmessungen des Prüfkörpers erreicht hat, bilden sich stehende Wellen, die wiederum Aufgaben für bildgebende Verfahren erschweren.

Um eine Erfassung eines entsprechenden Schallimpulses an den Erfassungspositionen einfacher und damit aussagekräftiger zu machen, wäre es von Vorteil, den Schallimpuls als eine Art Rechteckimpuls auszubilden, wobei dem Rechteckimpuls im Bereich seiner vorliegenden oberen Amplitude eine Frequenzmodulation überlagert ist und diese Frequenz eine Wellenlänge im Größenordnungsbereich des zu erfassenden Defekts aufweist.

Um einen derart angestrebten Impuls als Schallsignal ansatzweise zu erzeugen, schlägt die Erfindung zwei weitere Anregungsweisen, welche neben dem Impulshammer zur Verfügung stehen können, vor.

Zum einen besteht die Möglichkeit, einen Schallimpuls mittels einer thermischen Schockwelle im Material zu erzeugen. Möglich ist, eine thermische Schockwelle durch die punktuelle Anregung bzw. Erwärmung des Materials mittels eines Lasers zu erzeugen.

Alternativ wird bei ausreichenden Materialeigenschaften vorgeschlagen, die Anregung durch eine magnetische Induktion und eine daraus resultierende Erwärmung zu erzeugen.

Relevant dabei ist stets, dass die Anregungsdauer, und somit die Ausdehnung des als Rechteckimpuls loszuschickenden Wellenpakets sehr kurz gegenüber der wärmeleit-Zeitskala ausgebildet ist, sodass keine Verbreiterung aufgrund von Wärmeleitungseffekten des zu analysierenden Schallimpulses erfolgt. Zur Abstimmung der Erzeugungsparameter des jeweiligen Anregungsverfahrens, insbesondere des Anregungsverfahrens der magnetischen Induktion ist es notwendig, die Resonanzfrequenz der Gitterschwingungen im Körper zu kennen und diese mit derjenigen Anregungsfrequenz und Anregungsamplitude abzustimmen, welche eine zerstörungsfreie Anregung (ohne thermische Gitterdefekte zu erzeugen) zulässt. Als aufmodulierte Schwingungsfrequenz ist sodann die Eigenfrequenz der Gitterpunkte zu wählen, welche sodann auch den Anregungsimpuls als aufmodulierte Ultraschallschwingung als Schallsignal durch den Körper fortsetzt. Zur Erzeugung eines Schallimpulses mittels magnetischer Induktion, welche auf thermische Effekte innerhalb des Körpers zielt, ist es notwendig, dass der Körper eine entsprechende Magnetisierbarkeit und Leitfähigkeit aufweist, um durch die magnetische Induktion eine thermische Schockwelle erzeugen zu können.

Eine weitere Anregungsmethode zur Erzeugung eines definierten Schallimpulses ist durch die erzwungene Ausrichtung der magnetischen Momente, vorzugsweise durch supraleitungstechnisch erzeugte Magnetfelder, gegeben.

Jeder Gitterpunkt im Inneren eines Festkörpers besitzt ein lokales magnetisches Moment. Dieses lokale magnetische Moment lässt sich durch ein starkes lokales Magnetfeld, welches insbesondere in der Größenordnung von vier Tesla oder mehr anzusiedeln, und lokal auf einen Bereich von wenigen Kubikmillimetern beschränkt ist (10 bis 50 mm$^3$) ausrichten. Bei bekannter Resonanzfrequenz und bekannter zerstörungsfreier Anregungsamplitude für das entsprechende Gitter ist es möglich, durch supraleitungstechnisch erzeugte magnetische Wechselfelder, wobei die magnetischen Wechselfelder auch anderweitig in der benötigten Stärke erzeugt werden können, eine lokale Ausrichtung der magnetischen Momente herbeizuführen, welche nach einer extrem kurzen Zeitdauer, in der Regel im Bereich von wenigen Nanosekunden, erfolgt. Auf diese Weise werden lokale Gitterschwingungen erzeugt, welche sodann als Schwingungsimpuls bzw. Schallimpuls durch den Körper voranschreiten und an vorliegenden Defekten, bzw. Grenzflächen, Reflexionen oder Transmissionen erfahren, die sodann nach dem erfindungsgemäßen Verfahren detektiert werden können.

In einer zweckmäßigen Ausführung des erfindungsgemäßen Verfahrens ist vorgesehen, dass die Wellenlänge des Schallsignals im Körper ca. 0,1 mm bis 3 mm, vorzugsweise 0,5 mm bis 1 mm beträgt, und die Frequenz des Schallsignals > 200 MHz ist. Als zweckmäßig herausgestellt haben sich Wellenlängen im Bereich von 1 mm, und Frequenzen im Bereich von ca. 100 MHz.

In einer überdies zweckmäßigen Ausführung des Verfahrens ist vorgesehen, dass die Erfassung des Schallsignals mittels mindestens einem Laser-Interferometer erfolgt. Die Schallsignalerfassung bedarf einer erheblichen Präzision, sodass sich die bereits aus dem Stand der Technik bekannten Laser-Interferometer anbieten, auch in diesem Fall zum Einsatz zu kommen. Grundsätzlich sind jedoch auch andere Schallerfassungsmethoden möglich, welche die ausreichende Präzision und Signalempfindlichkeit aufweisen.

Zum besseren Verständnis bzw. zur näheren Erläuterung des erfindungsgemäßen Verfahrens sollen im folgenden Ausführungsbeispiel einige Schritte des erfindungsgemäßen Verfahrens exemplarisch dargestellt werden. Die Erfindung ist jedoch nicht auf das gezeigte Ausführungsbeispiel beschränkt, sie umfasst vielmehr all diejenigen Ausführungen, welche von erfindungsgemäßen Gedanken Gebrauch machen.

Es zeigen im Rahmen des Ausführungsbeispiels

Figur 1     eine schematische Darstellung eines idealen Schallimpulses

Figur 2     eine schematische Darstellung eines reellen Schallimpulses.

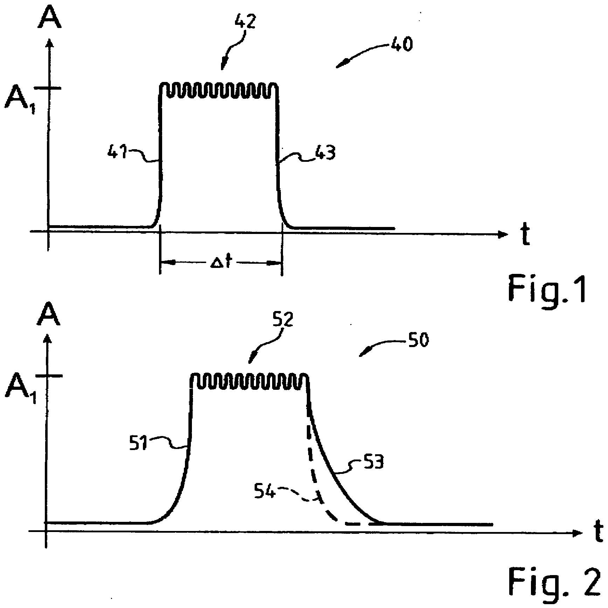

Figur 1 zeigt eine schematische Darstellung eines idealen zu erzeugenden Schallimpulses 40, welcher vorliegend als Amplitudensignal A über der Zeit t aufgetragen ist. Das Amplitudensignal A weist an seiner Anregungsflanke 41 einen steilen, nahezu sprunghaften Anstieg auf eine gewünschte Amplitude A1 auf, wobei sodann auf der Amplitude A1 aufmoduliert ein Schallsignal 42 mit einer definierten Wellenlänge vorgesehen ist. Nach Ablauf der Zeitdauer $\Delta$t für die Anregungsdauer des Signalimpulses 40 fällt die Amplitude ausgehend von der Anregungsamplitude A1 über die Abklingflanke 43 nahezu sprunghaft ab, sodass das erzeugte Wellenpaket in Form eines Schallimpulses durch den zu analysierenden Körper voranschreiten kann.

Figur 2 zeigt eine schematische Darstellung eines reellen Signalimpulses 50, welcher ebenfalls einen Anstieg auf eine Anregungsamplitude A1 aufweist. Die Anregungsflanke 51 ist hierbei steil jedoch nicht sprunghaft ausgebildet, da sich ein entsprechendes Anregungssignal im Körper erst ausbilden muss. Das aufmodulierte Schallsignal 52 entspricht in seiner

Wellenlänge ebenfalls der Größenordnung der zu analysierenden Defekte. Soweit nach erfolgter Anregung des Signalimpulses 50 die Anregung einfach abgeschaltet wird, ergibt sich eine reelle Abklingflanke 53, welche aufgrund der gegebenen Materialgrößen, wie beispielsweise Gitterelastizität oder ähnliches erklärt werden kann. Es besteht jedoch auch die Möglichkeit durch Anlegung eines entsprechenden statischen Feldes, beispielsweise eines Magnetfeldes zur Fixierung der lokalen magnetischen Momente ohne aufmoduliertes Wechselfeld eine Art festhalten der Gitterschwingungen vorzunehmen, wodurch sich eine wesentlich steilere Abklingflanke 54 bei angelegtem Haltefeld ergibt.

Je nach Anwendungsfall können die entsprechenden Anregungssignale aufgrund ihrer jeweilig vorteilhaften Eigenschaften eingesetzt werden und bieten somit Zugang zur notwendigen Analysepräzision.

Die somit ermittelbaren beiden verschiedenen Schallgeschwindigkeiten dienen zur Bestimmung der drei Elastizitätskonstanten E; $\mu$, und $\rho$.

Dabei sind E = Elastizitätsmodul und $\mu$ = Poisson-Zahl und $\rho$ = Dichte des Materials

Durch Messung dieser Materialkonstanten können Aussagen über die Qualität des Materials gemacht werden, wie zum Beispiel Durchbiegen oder Bruchgrenze von Stahl-Bauteilen.

Die Longitudinalwellen dienen der Strukturuntersuchung des Materials. Mit Hilfe des neuen Impulsgenerators können Schallwellen aus einem sehr großen Spektrum ausgewählt und erzeugt werden. Die Frequenzen der Schallwellen folgen der Frequenz des elektromagnetischen Feldes.

Der neue Impulsgenerator ermöglicht das Aussenden sehr kurzer Impulse, beispielsweise für die Tomographie. Diese Impulse können binär codiert werden, und damit vom Rauschen getrennt werden.

Die supraleitungselektronische Ausführung kann darüber hinaus die Oberflächenschwingungen bei metallischen Oberflächen mit Hilfe der Magnetfeld-Änderungen detektieren.

**Patentansprüche**

1.  Verfahren zur Anregung mechanischer Schwingungen, **dadurch gekennzeichnet, dass** die Erzeugung des Schallimpulses thermisch, vorzugsweise durch elektromagnetische Induktion und/oder durch Ausrichtung magnetischer Momente, vorzugsweise durch supraleitungstechnisch erzeugte Magnetfelder erfolgt.

2.  Verfahren nach Anspruch 1, **dadurch gekennzeichnet**, das in einem vorangehenden Verfahrensschritt die Schallgeschwindigkeit in dem Körper gemessen, insbesondere über eine Laufzeitmessung im Körper ermittelt wird, und vorzugsweise weitere Materialkonstanten bestimmt werden.

3.  Verfahren nach einem der Ansprüche 1 bis 2, **dadurch gekennzeichnet, dass** die Wellenlänge des Schallsignals im Körper ca. 0,1 mm bis 3 mm, vorzugsweise 0,5 mm bis 1mm und/oder die Frequenz des Schallsignals größer 2,5 MHz ist.

4. Verfahren nach einem der Ansprüche 1 bis 3, **dadurch gekennzeichnet, dass** die Erfassung des Schallsignals mittels mindestens einem Laser-Interferometer erfolgt.

5. Vorrichtung zur Erzeugung eines Schallimpulses, **dadurch gekennzeichnet, dass** die Vorrichtung nach einem Verfahren nach einem der vorangegangenen Ansprüche einen Schallimpuls in einem Festkörper erzeugt.

Fig.1

Fig. 2

EP 2 487 678 A1

Europäisches
Patentamt

European
Patent Office

Office européen
des brevets

## EUROPÄISCHER RECHERCHENBERICHT

Nummer der Anmeldung

EP 12 00 0818

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 649 632 B2 (MURRAY TODD W [US]) 19. Januar 2010 (2010-01-19) * Spalte 2, Zeile 64 - Spalte 4, Zeile 8; Beispiele 1-2 * ----- | 1-5 | INV. G10K15/04 G01N29/34 |
| X | EP 0 095 227 A1 (THERMA WAVE INC [US]) 30. November 1983 (1983-11-30) * Spalte 7, Zeile 10 - Spalte 9, Zeile 20; Abbildung 1 * ----- | 1-5 | |
| X | US 5 131 392 A (JOLESZ FERENC A [US] ET AL) 21. Juli 1992 (1992-07-21) * Zusammenfassung; Anspruch 1; Abbildung 6 * ----- | 1-5 | |
| X | DE 102 01 066 A1 (SIEMENS AG [DE]) 31. Juli 2003 (2003-07-31) * Absätze [0017] - [0018]; Abbildungen 1-2 * ----- | 1-5 | |

RECHERCHIERTE
SACHGEBIETE (IPC)

G10K
G01N

Der vorliegende Recherchenbericht wurde für alle Patentansprüche erstellt

| Recherchenort | Abschlußdatum der Recherche | Prüfer |
|---|---|---|
| München | 9. Juli 2012 | Trique, Michael |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

**EP 2 487 678 A1**

**ANHANG ZUM EUROPÄISCHEN RECHERCHENBERICHT
ÜBER DIE EUROPÄISCHE PATENTANMELDUNG NR.**

EP 12 00 0818

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2012

| Im Recherchenbericht angeführtes Patentdokument | Datum der Veröffentlichung | Mitglied(er) der Patentfamilie | Datum der Veröffentlichung |
|---|---|---|---|
| US 7649632 B2 | 19-01-2010 | US 2007273952 A1<br>WO 2005094503 A2 | 29-11-2007<br>13-10-2005 |
| EP 0095227 A1 | 30-11-1983 | DE 95227 T1<br>EP 0095227 A1<br>JP 58205850 A<br>US 4484820 A | 27-09-1984<br>30-11-1983<br>30-11-1983<br>27-11-1984 |
| US 5131392 A | 21-07-1992 | AU 7480291 A<br>CA 2075935 A1<br>EP 0515572 A1<br>IL 97231 A<br>JP H05509240 A<br>US 5131392 A<br>WO 9111958 A1 | 03-09-1991<br>14-08-1991<br>02-12-1992<br>16-07-2000<br>22-12-1993<br>21-07-1992<br>22-08-1991 |
| DE 10201066 A1 | 31-07-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0812479 B1